(19) Europäisches Patentamt
European Patent Office
Office européen des brevets

(11) **EP 3 047 262 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(21) Anmeldenummer: **14741323.1**

(22) Anmeldetag: **21.07.2014**

(51) Int Cl.:
**G01N 27/12** *(2006.01)*

(86) Internationale Anmeldenummer:
**PCT/EP2014/065589**

(87) Internationale Veröffentlichungsnummer:
**WO 2015/039786 (26.03.2015 Gazette 2015/12)**

(54) **MIKROHEIZPLATTENVORRICHTUNG UND SENSOR MIT EINER MIKROHEIZPLATTENVORRICHTUNG**

MICRO HEATING PLATE DEVICE AND SENSOR HAVING A MICRO HEATING PLATE DEVICE

DISPOSITIF MICROPLAQUE CHAUFFANTE ET CAPTEUR COMPRENANT UN DISPOSITIF MICROPLAQUE CHAUFFANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2013 DE 102013218840**

(43) Veröffentlichungstag der Anmeldung:
**27.07.2016 Patentblatt 2016/30**

(73) Patentinhaber: **Robert Bosch GmbH**
**70442 Stuttgart (DE)**

(72) Erfinder:
• **FIX, Richard**
**70839 Gerlingen (DE)**

• **SCHELLING, Christoph**
**70597 Stuttgart (DE)**

(56) Entgegenhaltungen:
**WO-A1-2005/090958      DE-A1- 4 400 838**
**JP-A- S59 197 848      US-A1- 2004 075 140**

• **FONSECA ET AL: "Use of boron heavily doped silicon slabs for gas sensors based on free-standing membranes", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, Bd. 130, Nr. 1, 10. März 2008 (2008-03-10) , Seiten 538-545, XP022519716, ISSN: 0925-4005, DOI: 10.1016/J.SNB.2007.09.081**

## Beschreibung

Die Erfindung betrifft eine Mikroheizplattenvorrichtung und einen Sensor mit einer Mikroheizplattenvorrichtung.

## Stand der Technik

In der DE 10 2007 057 500 A1 sind Gassensorelemente beschrieben. Eines der Gassensorelemente ist ein mikromechanisch hergestellter Metalloxid-Gassensor, welcher eine auf einem Rahmen aufliegende und einen Platinheizer tragende Membran aufweist. Der Rahmen ist mittels eines anisotropen Ätzprozesses aus einem Siliziumwafer hergestellt.

In der DE 44 00 838 A1 und in der Veröffentlichung FONSECA ET AL: "Use of boron heavily doped silicon slaps for gas sensors based on free-standing membranes" sind Gassensoren beschrieben, deren sensitives Material auf einer über einer Kaverne aufgespannten Membran aufgebracht ist. Einige dieser Gassensoren haben entweder einen an einer Innenseite der Membran aufgehängten Wärmereflektor oder eine wärmereflektierende Schicht, welche auf einer von der Membran weg gerichteten Seite der Kaverne ausgebildet ist.

DE 44 00 838 A1 und US 2004/0075140 A1 beschreiben Gassensoren mit Mikroheizplattenvorrichtungen mit unter der Membran in der Kaverne angebrachten Reflektorelementen zur Reflektion von Wärmestrahlung in die Membran.

Des Weiteren ist in der JP S59 197848 A ein elliptischer Reflektor zum Warmhalten eines Sensorelements beschrieben.

## Offenbarung der Erfindung

Die Erfindung schafft eine Mikroheizplattenvorrichtung mit den Merkmalen des Anspruchs 1 und einen Sensor mit einer Mikroheizplattenvorrichtung mit den Merkmalen des Anspruchs 6.

## Vorteile der Erfindung

Die vorliegende Erfindung realisiert eine Mikroheizplattenvorrichtung, bzw. einen damit ausgestattetes Sensor, mit einer verminderten Wärmeabgabe in eine äußere Umgebung der Mikroheizplattenvorrichtung/des Sensors. Durch die Reduzierung der Wärmeabgabe in die äußere Umgebung kann der Wirkungsgrad der Mikroheizplattenvorrichtung oder des damit ausgebildeten Sensors gesteigert werden. Somit ist ein energiesparender Betrieb der Mikroheizplattenvorrichtung/des Sensors möglich. Außerdem entfällt durch die mittels der vorliegenden Erfindung realisierbare Verminderung der Wärmeabgabe das herkömmliche Risiko einer unerwünschten Erwärmung/Überhitzung von nahe an der Mikroheizplattenvorrichtung/dem Sensor angeordneten elektronischen Komponenten.

Die Mikroheizplattenvorrichtung, bzw. der damit ausgestattete Sensor, kann somit problemlos zusammen mit anderen (elektronischen) Komponenten, selbst mit thermisch sensitiven Komponenten, in einem vergleichsweise kleinen Volumen angeordnet werden. Dies erleichtert eine Integration der Mikroheizplattenvorrichtung/des Sensors zusammen mit mindestens einer anderen (elektronischen) Komponente in ein vergleichsweise kleines Gerät, wie beispielsweise ein Mobilgerät (Handy, Uhr) oder in ein Sensornetzwerk (IoT). Außerdem können mittels der vorliegenden Erfindung thermische Isolierungen, welche herkömmlicherweise an einer Mikroheizplattenvorrichtung/einem beheizten Sensor notwendig sind, vereinfacht oder weggelassen werden. Des Weiteren können mittels der vorliegenden Erfindung mit der vorteilhaften Mikroheizplattenvorrichtung/dem entsprechenden Sensor ausgestattete Geräte verkleinert/platzsparender ausgebildet werden. Die vorliegende Erfindung trägt außerdem noch zu einer billigeren Herstellbarkeit von mit der Mikroheizplattenvorrichtung/dem Sensor ausgestatten Geräten bei.

In einer vorteilhaften Ausführungsform ist das mindestens eine Reflektorelement an der Innenseite der Membran aufgehängt. Das mindestens eine Reflektorelement kann somit auf einfache Weise in einem vergleichsweise kleinen Abstand zu der Membran angeordnet werden.

Insbesondere kann ein optischer Abstand zwischen dem mindestens einen Reflektorelement und der mindestens einen Heizleitung oder einer von der Kaverne weg gerichteten Außenseite der Membran gleich einem Viertel einer Wellenlänge sein, bei welcher die von der mindestens einen Heizleitung und/oder der Membran ausgestrahlte Wärmestrahlung ein Energieflussmaximum (Intensitätsmaximum) aufweist. Dies gewährleistet eine vorteilhafte Reabsorption der mittels des mindestens einen Reflektorelements reflektierten Wärmestrahlung durch die Membran.

Als Alternative oder als Ergänzung dazu kann das mindestens eine Reflektorelement oder mindestens ein weiteres Reflektorelement an einer von der Membran weg gerichteten Rückseite der Kaverne ausgebildet sein. Auch eine Ausstattung der Mikroheizplattenvorrichtung mit mindestens einem derart angeordneten Reflektorelement/weiteren Reflektorelement gewährleistet die vorteilhafte Verringerung einer unerwünschten Wärmeabgabe in die äußere Umgebung der Mikroheizplattenvorrichtung.

Beispielsweise kann die Membranträgereinrichtung ein Substrat umfassen, durch welches die Kaverne strukturiert ist, wobei das Substrat mittels einer Bond- oder Klebeverbindung an einer Trägerplatte, auf welcher das mindestens eine Reflektorelement oder das mindestens eine weitere Reflektorelement angeordnet ist, so befestigt ist, dass das mindestens eine Reflektorelement oder das mindestens eine weitere Reflektorelement an der Rückseite der Kaverne liegt. Eine derart ausgebildete Mikroheizplattenvorrichtung ist vergleichsweise einfach und relativ kostengünstig herstellbar.

In einer weiteren vorteilhaften Ausführungsform ist an der Außenseite der Membran mindestens ein Frontreflektorelement angeordnet. Man kann dabei auch von einer Anordnung des mindestens einen Frontreflektorelements der Außenseite der Membran gegenüberliegend sprechen. Auch mittels des mindestens einen Frontreflektorelements kann die unerwünschte Abgabe von thermischer Energie an eine äußere Umgebung der Mikroheizplattenvorrichtung unterdrückt/vermindert werden.

Außerdem können das mindestens eine Reflektorelement, das mindestens eine weitere Reflektorelement und/oder das mindestens eine Frontreflektorelement eine elliptische oder paraboloide Form aufweisen. Vorzugsweise ist die elliptische oder paraboloide Form so ausgelegt, dass deren Brennpunkt mit einer Ebene der Membran zusammenfällt. Dies steigert die Effektivität des mindestens einen Reflektorelements, des mindestens einen weiteren Reflektorelements und/oder des mindestens einen Frontreflektorelements.

Die Mikroheizplattenvorrichtung kann beispielsweise als Sensorbauteil für einen Sensor ausgebildet sein und an und/oder in der Membran mindestens ein sensitives Material umfassen, welches mindestens eine physikalische Größe aufweist, die abhängig von einer Stoffkonzentration mindestens eines Stoffes ist. Die Mikroheizplattenvorrichtung kann somit zur Realisierung eines vorteilhaften Gas-, Partikel- und/oder Flüssigkeitssensors beitragen. Es wird jedoch darauf hingewiesen, dass die Einsetzbarkeit der Mikroheizplattenvorrichtung nicht auf ein Sensorbauteil für einen Sensor, insbesondere auf die hier aufgezählten Sensortypen, limitiert ist.

Die oben beschriebenen Vorteile der Mikroheizplattenvorrichtung sind auch bei einem Sensor mit einer derartigen Mikroheizplattenvorrichtung gewährleistet. Die Mikroheizplattenvorrichtung ermöglicht eine vorteilhafte Integration stoffsensitiver Sensorbauteile in Gebrauchsgüter (Consumer Electronics), mobile Sensoren und/oder Sensornetzwerke. Eine Miniaturisierung dieser Geräte mit der integrierten Mikroheizplattenvorrichtung wird mittels der vorliegenden Erfindung gesteigert. Außerdem ist nicht zu befürchten, dass sich eine Erwärmung der Mikroheizplattenvorrichtung negativ auf andere Bauelemente oder Sensoren im gleichen Package und/oder im gleichen Gerät auswirkt.

Kurze Beschreibung der Zeichnungen

Weitere Merkmale und Vorteile der vorliegenden Erfindung werden nachfolgend anhand der Figuren erläutert. Es zeigen:

Fig. 1a und 1b     einen Querschnitt und eine Draufsicht auf eine erste Ausführungsform der Mikroheizplattenvorrichtung;

Fig. 2     eine schematische Darstellung einer zweiten Ausführungsform der Mikroheizplattenvorrichtung; und

Fig. 3     eine schematische Darstellung einer dritten Ausführungsform der Mikroheizplattenvorrichtung.

Ausführungsformen der Erfindung

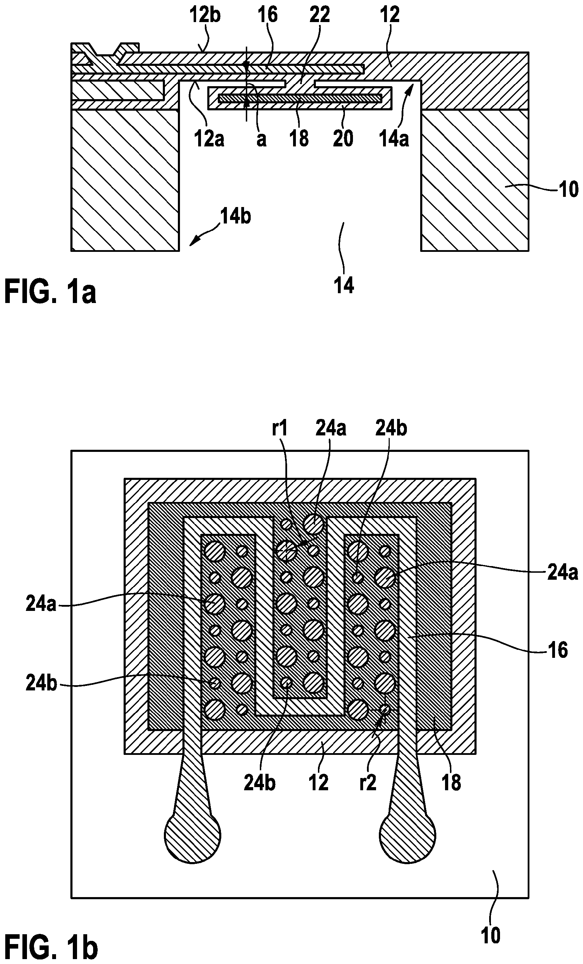

Fig. 1a und 1b zeigen einen Querschnitt und eine Draufsicht auf eine erste Ausführungsform der Mikroheizplattenvorrichtung.

Die in Fig. 1a und 1b schematisch dargestellte Mikroheizplattenvorrichtung umfasst eine Membranträgereinrichtung 10 und eine Membran 12, welche mindestens eine in der Membranträgereinrichtung 10 ausgebildete Kaverne 14 zumindest teilweise überspannt. Insbesondere kann eine Membranseite 14a der Kaverne 14 vollständig von der Membran 12 abgedeckt sein. Die Membranträgereinrichtung 10 kann beispielsweise ein Substrat, durch welches die Kaverne 14 strukturiert ist, umfassen/sein. Beispielsweise kann ein Halbleitersubstrat, wie insbesondere ein Siliziumsubstrat, zum Herstellen der Membranträgereinrichtung 10 mit der darin ausgebildeten Kaverne 14 vorteilhaft verwendet werden. Es wird jedoch darauf hingewiesen, dass die hier beschriebene Ausbildungsmöglichkeit zum Realisieren der Membranträgereinrichtung 10 lediglich beispielhaft zu interpretieren ist.

Die Membran 12 kann einschichtig oder mehrschichtig aufgebaut sein. Insbesondere kann die Membran 12 als dielektrische Membran 12 ausgebildet sein. Beispielsweise umfasst die Membran 12 Siliziumoxid oder Siliziumnitrid. Anstelle der hier genannten Materialien können jedoch auch andere zum Herstellen der Membran 12 genutzt werden.

Die Mikroheizplattenvorrichtung weist auch mindestens eine an und/oder in der Membran 12 angeordnete Heizleitung 16 auf. Die mindestens eine Heizleitung 16 kann insbesondere als in die Membran 12 integriertes Heizelement ausgebildet sein. Beispielsweise kann die mindestens eine Heizleitung 16 meanderförmig ausgebildet sein. Zur Herstellung der mindestens einen Heizleitung 16 können Platin und/oder Nickel eingesetzt werden.

Außerdem weist die Mikroheizplattenvorrichtung auch mindestens ein Reflektorelement 18 auf, welches derart an einer zu der Kaverne 14 ausgerichteten Innenseite 12a der Membran 12 angeordnet ist, dass mittels des mindestens einen Reflektorelements 18 eine von der mindestens einen Heizleitung 16 und/oder der Membran 12 ausgestrahlte Wärmestrahlung zumindest teilweise auf und/oder in die Membran 12 zurück reflektierbar ist. Mittels des mindestens einen Reflektorelements 18 kann, solange eine Temperatur der Membran 12 und/oder der mindestens einen Heizleitung 16 höher als eine Temperatur des mindestens einen Reflektorelements 18 ist, ein Teil der Wärmestrahlung in die Membran 12 zurückreflektiert werden und geht damit nicht verloren. Somit realisiert das mindestens eine Reflektorelement 18 eine Reduzierung der Leistungsaufnahme der Mikroheizplattenvorrichtung. Der Energieverbrauch der Mikroheizplattenvorrichtung kann somit limitiert werden. Außerdem kann mittels des mindestens einen Reflektorelements 18 einer unerwünschten Erwärmung einer äußeren Umgebung der Mikroheizplattenvorrichtung entgegengewirkt werden. Deshalb können selbst thermisch sensitive Elemente näher an der Mikroheizplattenvorrichtung angeordnet werden, ohne dass dies eine (aufwändigere) thermische Isolierung der Mikroheizplattenvorrichtung gegenüber ihrer äußeren Umgebung erfordert. Durch die verringerte Wärmeabgabe der Mikroheizplattenvorrichtung der Fig. 1a und 1b an ihre äußere Umgebung ist auch eine geringere Belastung für nahe daran angeordneten thermisch sensitiven Elemente gewährleistet, was deren Robustheit verbessert und deren Lebensdauer steigert. Die vorteilhafte Ausstattung der Mikroheizplattenvorrichtung mit dem mindestens einen Reflektorelement 18 ermöglicht auch eine kostengünstige Integration der Mikroheizplattenvorrichtung zusammen mit anderen elektronischen Komponenten in ein vergleichsweise kleines Gerät, wie beispielsweise ein Mobilgerät.

Das mindestens eine Reflektorelement 18 kann zumindest teilweise aus einem Metall gebildet sein. Für das mindestens eine Reflektorelement 18 können beispielsweise Silber und/oder Gold verwendet werden. Das mindestens eine Reflektorelement 18 kann ein- oder mehrschichtig aufgebaut sein.

In der Ausführungsform der Fig. 1a und 1b ist das mindestens eine Reflektorelement 18 an der Innenseite 12a der Membran 12 aufgehängt. Das mindestens eine Reflektorelement 18 kann somit als Reflektor- und/oder Absorberschirm bezeichnet werden. Das mindestens eine Reflektorelement 18 kann punktuell mit der Membran 12 verbunden sein. Insbesondere kann eine mittige Verbindung zwischen dem mindestens einen Reflektorelement 18 und der Membran 12 ausgebildet sein.

Die in Fig. 1a dargestellte Aufhängung des mindestens einen Reflektorelements 18 an der Innenseite 12a der Membran 12 ist beispielsweise realisierbar, indem das mindestens eine Reflektorelement 18 in ein (vorzugsweise dielektrisches) Material 20 eingebettet wird, welches mindestens einen die Innenseite 12a der Membran 12 kontaktierenden Überstand 22 aufweist. Insbesondere kann zum Einbetten des mindestens einen Reflektorelements 18 und zum Bilden des mindestens einen Überstands 22 das mindestens eine Material der Membran 12 verwendet werden. Somit können einfach ausführbare Ätz- und Abscheideschritte zum Herstellen der Aufhängung des mindestens einen Reflektorelements 18 ausgeführt werden. Die in Fig. 1a und 1b dargestellte Mikroheizplattenvorrichtung ist damit kostengünstig herstellbar. Außerdem ist selbst bei einer Herstellung der Mikroheizplattenvorrichtung in einer Massenproduktion eine Designvorgabe noch verlässlich einhaltbar.

Das Intensitätsmaximum einer ausgestrahlten Wärmestrahlung eines Schwarzkörperstrahlers ergibt sich nach dem Wienschen Verschiebungsgesetz gemäß Gleichung (Gl 1) mit:

$$(\text{Gl } 1) \qquad v_{max} = \frac{2{,}82 * k_B}{h} * T,$$

wobei $v_{max}$ die Frequenz ist, bei welcher die von der mindestens einen Heizleitung 16 und/oder der Membran 12 ausgestrahlte Wärmestrahlung ein Intensitätsmaximum aufweist. T ist die Temperatur, $k_B$ die Boltzmannkonstante und h das plancksche Wirkungsquantum.

Häufig werden mittels der mindestens einen Heizleitung 16 Temperaturen T realisiert, welche zwischen 150°C und 700°C liegen. Damit ergeben sich Intensitätsmaxima der ausgestrahlten Wärmestrahlung in einem Wellenlängenbereich von 5 μm bis 12 μm. Das Spektrum der ausgestrahlten Wärmestrahlung ist in der Regel relativ breitbandig. Die hier aufgeführten Angaben und Zahlenwerte sind jedoch nur beispielhaft zu interpretieren.

Vorzugsweise ist ein optischer Abstand a zwischen dem mindestens einen Reflektorelement 18 und der mindestens einen Heizleitung 16 oder einer von der Kaverne 14 weg gerichteten Außenseite 12b der Membran 12 gleich einem Viertel einer Wellenlänge, bei welcher die von der mindestens einen Heizleitung 16 und/oder der Membran 12 ausgestrahlte Wärmestrahlung ein Energieflussmaximum (Intensitätsmaximum) aufweist. Dies steigert die Effizienz des mindestens einen Reflektorelements 18 als Reflektor- und/oder Absorberschirm. Beispielsweise kann so die Wärmeenergie gezielt auf die mindestens eine Heizleitung 16 oder mindestens ein an der Außenseite 12b der Membran 12 angeordnetes (aufzuheizendes) Material zurück reflektiert werden.

Unter dem optischen Abstand a kann eine Größe gemäß Gleichung (Gl 2) verstanden werden, mit:

$$(\text{Gl } 2) \qquad a = \sum d_i * n_i,$$

wobei $d_i$ die Schichtdicken der zwischen dem mindestens einen Reflektorelement 18 und der mindestens einen Heizleitung 16 oder der Außenseite 12b der Membran 12 liegenden Schichten und $n_i$ die Brechungsindizes dieser Schichten sind.

Als Ergänzung oder als Alternative zu dem mindestens einen Reflektorelement 18 kann die Mikroheizplattenvorrichtung auch mindestens ein an der Außenseite 12b der Membran 12 angeordnetes Frontreflektorelement und/oder mindestens ein an einer von der Membran 12 weg gerichteten Rückseite 14b der Kaverne 14 ausgebildetes weiteres Reflektorelement umfassen. Bezüglich der Ausbildungsmöglichkeiten für das mindestens eine Frontreflektorelement oder das mindestens eine weitere Reflektorelement wird auf unten beschriebene Ausführungsformen verwiesen.

Wie anhand der Fig. 1b erkennbar ist, weist die Membran 12 Muster von plasmonischen Strukturen 24a und 24b auf. Die Muster von plasmonischen Strukturen 24a und 24b können auch als plasmonische Absorberstrukturen bezeichnet werden. Elektromagnetische (Wärme-)Strahlung kann in den plasmonischen Strukturen 24a und 24b kollektive Schwingungen der Elektronenwolke, sogenannte Plasmonen, anregen. Die angeregten Plasmonen führen über Streumechanismen zu einer Erwärmung der Membran 12. Die Muster von plasmonischen Strukturen 24a und 24b bewirken damit eine Unterdrückung der von der Membran 12 ausgestrahlten Wärmestrahlung und verbessern eine Reabsorption der von dem mindestens einen Reflektorelement 18 zurückreflektierten Wärmestrahlung in der Membran 12.

Die plasmonischen Strukturen 24a und 24b sind vorzugsweise aus Metall gebildet. Beispielsweise können die plasmonischen Strukturen 24a und 24b (metallische) Prismen, insbesondere mit einer kreisförmigen, elliptischen und/oder kreuzförmigen Grundfläche, sein. In einer geschlossenen Metallschicht können auch inverse Strukturen, wie beispielsweise Fehlprismen, als plasmonische Strukturen 24a und 24b ausgebildet sein. Die plasmonische Strukturen 24a und 24b können insbesondere als Gitterstrukturen umschreibbar sein.

Bei einem Intensitätsmaximum der ausgestrahlten Wärmestrahlung in einem Wellenlängenbereich von 5 $\mu$m bis 12 $\mu$m sind Muster aus plasmonischen Strukturen 24a und 24b vorteilhaft, bei welchen ein Abstand zwischen benachbarten plasmonischen Strukturen 24a und 24b zwischen 0,5 $\mu$m bis 10 $\mu$m liegt. Vorteilhafter Weise liegt eine Strukturgröße einer plasmonischen Struktur 24a oder 24b, wie beispielsweise eine (maximale) Breite einer plasmonischen Struktur 24a oder 24b oder ein Radius r1 oder r2 einer kreisförmigen Grundfläche einer plasmonischen Struktur 24a oder 24b, zwischen 0,1 $\mu$m bis 5 $\mu$m. Die hier aufgeführten Zahlenwerte sind jedoch nur beispielhaft zu interpretieren.

Beispielsweise kann eine Membran 12 ein Muster aus gleichförmigen plasmonischen Strukturen 24a und 24b aufweisen. Vorzugsweise weist eine Membran 12 jedoch ein Muster aus plasmonischen Strukturen 24a und 24b auf, welches zumindest plasmonische Strukturen 24a mit einer ersten Strukturgröße/einem ersten Radius r1 und plasmonische Strukturen 24b mit einer zweiten Strukturgröße/einem zweiten Radius r2 (ungleich der mit ersten Strukturgröße/dem ersten Radius r1) umfasst. Auf diese Weise lässt sich eine Bandbreite eines Emissions- bzw. Absorptionsspektrums des Musters aus plasmonischen Strukturen 24a und 24b steigern.

Die mindestens eine Strukturgröße der plasmonischen Strukturen 24a und 24b kann auf einfache Weise auf mindestens einen gewünschten Wert eingestellt werden. Somit kann eine thermische Emission der Membran 12 speziell außerhalb ihrer Resonanzwellenlänge unterdrückt werden. Ebenso kann für eine effiziente Reabsorption der zurückreflektierten Wärmestrahlung nahe an ihrer Resonanzwellenlänge verlässlich gesorgt werden.

In einer vorteilhaften Weiterbildung kann auch das mindestens eine Reflektorelement 18 ein Muster von plasmonischen Strukturen aufweisen. Mittels der plasmonischen Strukturen kann ein Absortionsverhalten des mindestens einen Reflektorelements 18 verbessert werden. Das jeweilige mit den plasmonischen Strukturen ausgebildete Reflektorelement 18 heizt sich somit durch die abgestrahlte Wärmestrahlung auf und gibt die Wärmeenergie durch Wärmeleitung über den Überstand 22 zur Membran 12 wieder ab. Das mindestens eine Reflektorelement 18 kann somit die Funktion eines Energiezwischenspeichers erfüllen.

Auch die plasmonischen Strukturen des Reflektorelements 18 können metallische Strukturen, wie insbesondere (metallische) Prismen (mit einer kreisförmigen, elliptischen und/oder kreuzförmigen Grundfläche), inverse Strukturen (z.B. Fehlprismen) und/oder (metallische) Gitterstrukturen sein. Auch in diesem Fall können ein Abstand zwischen benachbarten plasmonischen Strukturen zwischen 0,5 $\mu$m bis 10 $\mu$m und eine Strukturgröße, wie z.B. eine (maximale) Breite oder ein Radius, zwischen 0,1 $\mu$m bis 5 $\mu$m liegen. Die plasmonischen Strukturen sind damit ebenfalls auf ein Energieemissionsmaximum der Wärmestrahlung abstimmbar. Wahlweise kann ein Muster aus gleichförmigen plasmonischen Strukturen oder aus plasmonischen Strukturen 24a und 24b mit mindestens zwei verschiedenen Strukturgrößen/Radien ausgebildet sein.

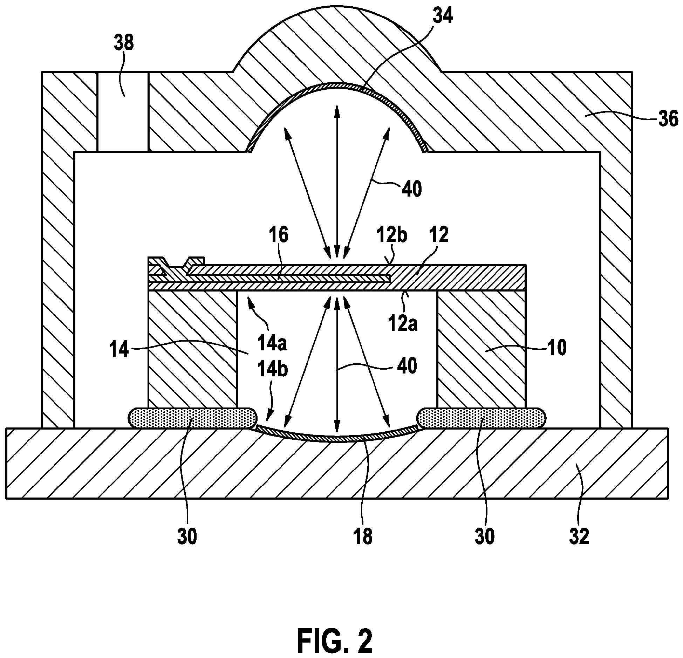

Fig. 2 zeigt eine schematische Darstellung einer zweiten Ausführungsform der Mikroheizplattenvorrichtung.

Bei der in Fig. 2 schematisch dargestellten Mikroplattenvorrichtung ist das mindestens eine Reflektorelement 18 an einer von der Membran 12 weg gerichteten Rückseite 14b der Kaverne 14 ausgebildet. Dazu ist das Substrat der Membranträgereinrichtung 10 mittels einer Bond- oder Klebeverbindung 30 an einer Trägerplatte 32, auf welcher das mindestens eine Reflektorelement 18 angeordnet ist, so befestigt, dass das mindestens eine Reflektorelement 18 an der Rückseite 14b der Kaverne liegt.

Außerdem weist die Mikroheizplattenvorrichtung der Fig. 2 auch an einer von der Kaverne 14 weg gerichteten Außenseite 12b der Membran 12 mindestens ein Frontreflektorelement 34 auf. Beispielhaft ist das mindestens eine Frontreflektorelement 34 an einer Innenseite einer Verkappung 36 ausgebildet, wobei die Verkappung 36 an der Trägerplatte 32 befestigt ist. Die Trägerplatte 32 und die Verkappung 36 können zusätzlich noch als Gehäuse der Mikroheizplattenvorrichtung genutzt werden. Das Gehäuse kann wahlweise flüssigkeitsdicht, luftdicht oder mit mindestens einer Gehäuseöffnung 38 ausgebildet sein. Die Ausstattung der Mikroheizplattenvorrichtung mit den Reflektorelementen 18 und 34 ist somit gleichzeitig mit einer Verpackung der Membran 12 in einem Gehäuse möglich. Auf diese Weise kann die Anzahl der zum Herstellen der Mikroheizplattenvorrichtung der Fig. 2 auszuführenden Verfahrensschritte reduziert werden.

Durch die Ausstattung der Mikroheizplattenvorrichtung mit mehreren Reflektorelementen 18 und 34 kann vergleichsweise viel von der abgestrahlten Wärmestrahlung wieder auf die Membran 12 zurückreflektiert werden. Insbesondere kann durch eine gekrümmte Ausbildung des mindestens einen Reflektorelements 18 und/oder des mindestens einen Frontreflektorelements 34 Wärmestrahlung aus einem größeren Raumwinkel eingesammelt und reflektiert werden.

Bevorzugter Weise sind das mindestens eine Reflektorelement 18 und/oder das mindestens eine Frontreflektorelement 34 mit einer elliptischen oder paraboloiden Form ausgebildet. Insbesondere kann ein Brennpunkt der jeweiligen Ellipse oder des Paraboloids mit einer Ebene der Membran 12 zusammenfallen. Wie anhand der Pfeile 40 in Fig. 2 dargestellt ist, kann auf diese Weise die zurückreflektierte Wärmestrahlung gezielt auf einen bestimmten Bereich der Membran 12 gerichtet werden. Dies ist insbesondere vorteilhaft, sofern eine vergleichsweise hohe Temperatur lediglich an einem bestimmten Bereich der Membran 12 gewünscht ist.

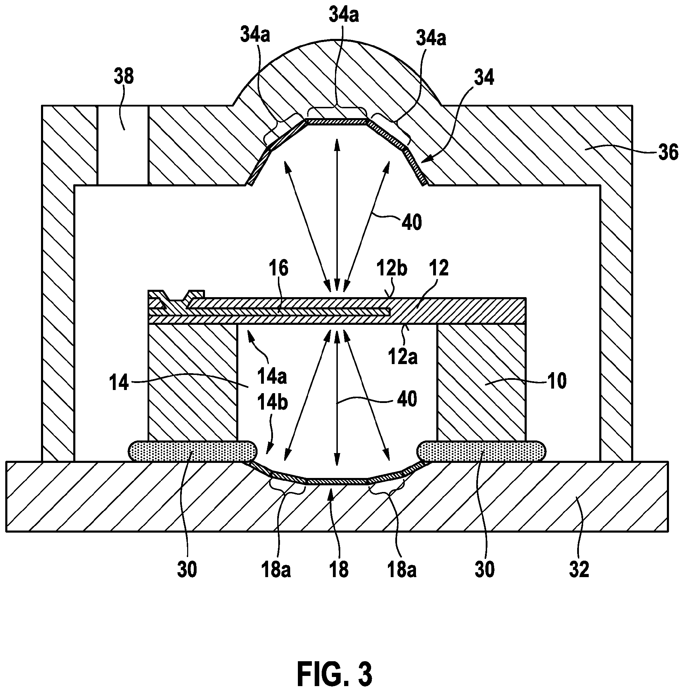

Fig. 3 zeigt eine schematische Darstellung einer dritten Ausführungsform der Mikroheizplattenvorrichtung.

Die in Fig. 3 schematisch dargestellte Mikroheizplattenvorrichtung weist alle Komponenten der zuvor beschriebenen Ausführungsform auf. Anstelle einer einflächigen Ausbildung des Reflektorelements 18 und des Frontreflektorelements 34 besitzt die Mikroheizplattenvorrichtung der Fig. 3 für die Elemente 18 und 34 jedoch jeweils mehrere planare Reflektorflächen 18a und 34a, welche zusammengesetzt eine ellipsolide oder parabolide Form für jedes der Elemente 18 und 34 nachbilden. Somit ist die bevorzugte Ausbildung der Elemente 18 und 34 auch ohne ein Ausführen von aufwändigen Herstellverfahren möglich.

Alle oben ausgeführten Mikroheizplattenvorrichtungen können als Sensorbauteile für einen Sensor genutzt werden. Dazu kann an und/oder in der Membran 12 mindestens ein sensitives Material, welches mindestens eine physikalische Größe aufweist, die abhängig von einer Stoffkonzentration mindestens eines Stoffes ist, abgeschieden sein. Ein derart ausgebildetes Sensorbauteil kann beispielsweise für einen Gas-, Partikelund/oder Flüssigkeitssensor genutzt werden. Eine Auswertung des Sensorbauteils kann beispielsweise über eine Messung einer auf die Stoffkonzentration des mindestens einen Stoffs zurückzuführenden Änderung der physikalischen Größe, wie beispielsweise einer elektrischen Leitfähigkeit (resistiv), einer Kapazität (kapazitiv) und/oder einer Austrittsarbeit (feldeffektbasiert), erfolgen.

Ein geeignetes sensitives Material ist beispielsweise $SnO_2$ und/oder $WO_3$. Eine als Sensorbauteil genutzte Mikroheizplattenvorrichtung kann jedoch auch ein anderes sensitives Material aufweisen.

Zur Verbesserung der Sensitivität und/oder Regeneration kann die Mikroheizplattenvorrichtung mittels der mindestens einen Heizleitung 16 auf eine gewünschte Temperatur, beispielsweise in einem Temperaturbereich zwischen 150°C und 700°C, aufgeheizt werden. Beispielsweise kann die mindestens eine Heizleitung 16 gepulst bestromt werden. Bei einem derartigen Pulsbetrieb der Mikroheizplattenvorrichtung kann verlässlich davon ausgegangen werden, dass eine Temperatur der mindestens einen Heizleitung 16 und/oder der Membran 12 höher liegt als eine Temperatur des mindestens einen Reflektorelements 18.

## Patentansprüche

1. Mikroheizplattenvorrichtung mit:

   einer Membranträgereinrichtung (10);
   einer Membran (12), welche mindestens eine in der Membranträgereinrichtung (10) ausgebildete Kaverne (14) zumindest teilweise überspannt; und
   mindestens einer an und/oder in der Membran (12) angeordneten Heizleitung (16);
   mindestens einem Reflektorelement (18), welches derart an einer Innenseite (12a) der Membran (12) aufgehängt und/oder an einer von der Membran (12) weg gerichteten Rückseite (14a) der Kaverne (14) ausgebildet ist, dass mittels des mindestens einen Reflektorelements (18) eine von der mindestens einen Heizleitung (16) und/oder der Membran (12) ausgestrahlte Wärmestrahlung zumindest teilweise auf und/oder in die Membran (12) zurück reflektierbar ist; **dadurch gekennzeichnet, dass**
   die Membran (12) und/oder das mindestens eine Reflektorelement (18) mindestens ein Muster von plasmonischen Strukturen (24a, 24b) aufweisen.

2. Mikroheizplattenvorrichtung nach Anspruch 1, wobei die Membranträgereinrichtung (10) ein Substrat umfasst, durch welches die Kaverne (14) strukturiert ist, und wobei das Substrat mittels einer Bond- oder Klebeverbindung (30) an einer Trägerplatte (32), auf welcher das mindestens eine Reflektorelement (18) oder das mindestens eine weitere Reflektorelement angeordnet ist, so befestigt ist, dass das mindestens eine Reflektorelement (18) an der Rückseite (14b) der Kaverne (14) liegt.

3. Mikroheizplattenvorrichtung nach einem der vorhergehenden Ansprüche, wobei an der Außenseite (12b) der Membran (12) mindestens ein Frontreflektorelement (34) angeordnet ist.

**4.** Mikroheizplattenvorrichtung nach einem der vorhergehenden Ansprüche, wobei das mindestens eine Reflektorelement (18)und/oder das mindestens eine Frontreflektorelement (34) eine elliptische oder paraboloide Form aufweisen.

**5.** Mikroheizplattenvorrichtung nach einem der vorhergehenden Ansprüche, wobei die Mikroheizplattenvorrichtung als Sensorbauteil für einen Sensor ausgebildet ist und an und/oder in der Membran (12) mindestens ein sensitives Material, welches mindestens eine physikalische Größe aufweist, die abhängig von einer Stoffkonzentration mindestens eines Stoffes ist, umfasst.

**6.** Sensor mit einer Mikroheizplattenvorrichtung nach einem der vorhergehenden Ansprüche.

**Claims**

**1.** Micro heating plate device having:

    a membrane support device (10);
    a membrane (12), which at least partly spans a cavity (14) formed in the membrane support device (10); and
    at least one heating line (16) arranged on and/or in the membrane (12);
    at least one reflector element (18), which is suspended on an inner side (12a) of the membrane (12) and/or formed on a rear side (14a) of the cavity (14) that faces away from the membrane (12), in such a way that, by means of the at least one reflector element (18), thermal radiation emitted from the at least one heating line (16) and/or the membrane (12) can be at least partly reflected back onto and/or into the membrane (12);
    **characterized in that**
    the membrane (12) and/or the at least one reflector element (18) has at least one pattern of plasmonic structures (24a, 24b).

**2.** Micro heating plate device according to Claim 1, wherein the membrane support device (10) comprises a substrate through which the cavity (14) is structured, and wherein the substrate is fixed by means of a bonded or adhesive connection (30) to a support plate (32), on which the at least one reflector element (18) or the at least one further reflector element is arranged, such that the at least one reflector element (18) is located on the rear side (14b) of the cavity (14).

**3.** Micro heating plate device according to one of the preceding claims, wherein at least one front reflector element (34) is arranged on the outer side (12b) of the membrane (12).

**4.** Micro heating plate device according to one of the preceding claims, wherein the at least one reflector element (18) and/or the at least one front reflector element (34) has/have an elliptical or paraboloidal shape.

**5.** Micro heating plate device according to one of the preceding claims, wherein the micro heating plate device is formed as a sensor component for a sensor and comprises at least one sensitive material on and/or in the membrane (12) which has at least one physical variable that depends on a material concentration of at least one material.

**6.** Sensor having a micro heating plate device according to one of the preceding claims.

**Revendications**

**1.** Dispositif de microplaque chauffante, comprenant :

    un dispositif de support de membrane (10) ;
    une membrane (12) qui recouvre au moins en partie au moins une cavité (14) formée dans le dispositif de support de membrane (10) ; et
    au moins un câble chauffant (16) disposé sur et/ou dans la membrane (12) ;
    au moins un élément réfléchissant (18) qui est suspendu sur une face interne (12a) de la membrane (12) et/ou formé sur une face arrière (14a) de la cavité (14) qui est tournée à l'opposé de la membrane (12) de manière à ce qu'un rayonnement thermique émis par ledit au moins un câble chauffant (16) et/ou la membrane (12) puisse être réfléchi au moins en partie sur et/ou dans la membrane (12) au moyen dudit au moins un élément réfléchissant (18) ;
    **caractérisé en ce que** la membrane (12) et/ou ledit au moins un élément réfléchissant (18) présentent au moins un motif de structures plasmoniques (24a, 24b).

**2.** Dispositif de microplaque chauffante selon la revendication 1, dans lequel le dispositif de support de membrane (10) comprend un substrat à travers lequel la cavité (14) est structurée, et dans lequel le substrat est fixé au moyen d'une liaison par soudure ou par adhésif (30) à une plaque de support (32) sur laquelle est disposé ledit au moins un élément réfléchissant (18) ou ledit au moins un autre élément réfléchissant, de manière à ce que ledit au moins un élément réfléchissant (18) soit situé au dos (14b) de la cavité (14).

3. Dispositif de microplaque chauffante selon l'une des revendications précédentes, dans lequel au moins un élément réfléchissant frontal (34) est disposé sur la face externe (12b) de la membrane (12).

4. Dispositif de microplaque chauffante selon l'une des revendications précédentes, **caractérisé en ce que** ledit au moins un élément réfléchissant (18) et/ou ledit au moins un élément réfléchissant frontal (34) présentent une forme elliptique ou parabolique.

5. Dispositif de microplaque chauffante selon l'une des revendications précédentes, **caractérisé en ce que** le dispositif de microplaque chauffante est réalisé sous la forme d'un composant de capteur destiné à un capteur et comprend, sur et/ou ou dans la membrane (12), au moins un matériau sensible qui présente au moins une grandeur physique dépendant d'une concentration en au moins une substance.

6. Capteur comprenant un dispositif de microplaque chauffante selon l'une des revendications précédentes.

FIG. 1a

FIG. 1b

**FIG. 2**

**FIG. 3**

**IN DER BESCHREIBUNG AUFGEFÜHRTE DOKUMENTE**

**In der Beschreibung aufgeführte Patentdokumente**

- DE 102007057500 A1
- DE 4400838 A1
- US 20040075140 A1
- JP S59197848 A